# EUROPEAN PATENT APPLICATION

(11) **EP 2 927 523 A1**
(43) Date of publication of application: **07.10.2015**
(21) Application number: 13859781.0
(22) Date of filing: 02.12.2013
(51) Int. Cl.: F16C 33/66, C10M 115/08, C10M 169/02, F16C 19/28, F16C 23/08, F16C 33/78, C10N 20/00, C10N 20/02, C10N 30/06, C10N 50/10

(54) **GREASE FILLED BEARING**

(30) Priority: 03.12.2012 JP 2012264519; 23.10.2013 JP 2013220463
(71) Applicant: NSK Ltd., Tokyo 141-8560 (JP); Kyodo Yushi Co., Ltd., Kanagawa 251-8588 (JP)
(72) Inventor: KANDA Haruka, Fujisawa-shi Kanagawa 251-8501 (JP); INAMI Noriyuki, Fujisawa-shi Kanagawa 251-8501 (JP); HOKAO Michita, Fujisawa-shi Kanagawa 251-8501 (JP); YOKOUCHI Atsushi, Fujisawa-shi Kanagawa 251-8501 (JP); KONNO Katsuhiro, Fujisawa-shi Kanagawa 251-8501 (JP)
(74) Representative: Grünecker Patent- und Rechtsanwälte PartG mbB
(86) International application number: PCT/JP2013/082402
(87) International publication number: WO 2014/087979

(57) **Abstract**

A grease-filled bearing filled with a grease composition containing a thickener which is a diurea compound represented by R₁-NHCONH-R₂-NHCONH-R₃ or a mixture thereof and a base oil containing alkyl diphenyl ether oil and containing poly α-olefin oil as an optional component at a mass ratio of 40:60 to 100:0 (alkyl diphenyl ether oil:poly α-olefin oil). In general formula (1), at least one of R₁ and R₃ is a C₆₋₁₂ aromatic hydrocarbon group and the other is a C₆₋₁₂ aromatic hydrocarbon group or a C₆₋₂₀ aliphatic hydrocarbon group. R₂ is a C₆₋₁₅ aromatic hydrocarbon group.

## Description

### Technical Field

The present invention relates to a bearing in which grease is enclosed and sealed, and relates to a bearing used, for example, for a roll supporting device of a continuous casting process or the like, a pallet carriage, a table roller, a ringer roll or a conveyer in steel facilities, construction machines, mining machines, or the like.

### Background Art

A rolling bearing (in general, a roller bearing) employed, for example, for a roll supporting device of a continuous casting process or the like, a pallet carriage, a table roller, a ringer roll, or a conveyer in steel facilities, construction machines, mining machines, or the like is used under very harsh conditions which hardly allow the formation of an oil film since its usage environment is subject to a low speed, a high load and a high temperature and involves exposure to cooling water or scale from the outside. In the rolling bearing used under such harsh conditions, grease in which the oil film thickness is ensured by a high-viscosity base oil and the fluidity is increased by providing high consistency is continuously supplied inside the bearing so as to always supply new grease to a contact surface and thereby prevent occurrence of a lubrication failure.

However, in a continuous grease supplying method, water or scale sometimes gets mixed in from the outside at the time of supplying grease, so that it is difficult to completely prevent the occurrence of a lubrication failure. When a lubrication failure occurs, excessive wear is produced due to rotation at a very low speed in a high load condition, which cases a problem that a ring is broken in some situation. In addition, there is also a case where due to the effect of water, rust is generated in the bearing stored outside the line during roll maintenance. When the operation is restarted after the completion of maintenance, a ring may be broken starting from the rust.

In order to prevent damage due to the lubrication failure, for example, Patent Document 1 has proposed a rolling bearing where an alloy steel containing from 0.6 to 1.3 mass% of C and from 8 to 20 mass% of Cr is used for a rolling element and at least either an inner ring or an outer ring is subjected to a carburizing treatment or a carbonitriding treatment. Furthermore, in order to prevent rust generation, for example, Patent Document 2 has proposed a grease composition where a surfactant, a succinic acid derivative, a metal sulfonate and a benzotriazole-based compound are added to enhance rust preventing performance.

### Prior Art Document

### Patent Document

Patent Document 1: JP-A-H9-264328
Patent Document 2: JP-A-2009-185084

### Summary of the Invention

### Problem to be Solved by Invention

However, in a continuous grease supplying method, water or scale unavoidably gets mixed in, and therefore, the lubrication failure or rust generation may not be sufficiently prevented by the above-described measures. In addition, since a large amount of grease is disposed, the working environment may be degraded or an adverse effect may be imposed on the environment.

Accordingly, an object of the present invention is to provide a bearing in which water or scale is not allowed to get mixed in from outside, thereby preventing lubrication failure or rust generation, and grease is enclosed and sealed, thus greatly reducing the consumption of grease.

### Means for Solving the Problem

The consumption of grease can be greatly reduced by sealing a grease composition, compared with a continuous grease supplying method. However, the sealed grease composition is required to stably effect smooth lubrication in the bearing for a long period of time and needs to form a sufficient oil film even in low-speed, high-load and high-temperature conditions and be excellent in the grease leakage resistance, heat stability and compatibility with a seal material.

The oil film thickness is known to be proportional to about 0.67 power of the rolling speed, so that as the rolling speed is lower, the oil film thickness is thinner, which leads harsh lubrication conditions likely to cause direct contact of surfaces with each other. As a result of intensive studies on the oil film formability in very-low-speed, high-temperature and water-mixed conditions, it has been revealed that the oil film thickness is increased by using an aromatic diurea compound as a thickener and the inflow property of grease into the contact surface is improved by using an aliphatic diurea compound. Accordingly, it has been found that a thick oil film can be stably formed on the contact surface by mixing an aromatic diurea compound and an aliphatic diurea compound.

Comparing an aromatic diurea compound and an aliphatic diurea compound, the aromatic diurea compound is in a relatively thick and short fiber shape and the thickener needs be used in a large amount to obtain a given consistency, whereas the aliphatic diurea is in a thin and long fiber shape and the amount of the thickener necessary for obtaining a given consistency is smaller. The oil film is considered to become thick due to entering of a thick aromatic diurea compound into the contact surface, and an oil film sufficiently thicker than the base oil is formed particularly in a very-low-speed region. In addition, it is considered that since fibers are unidirectionally aligned when the aliphatic diurea compound is subjected to shearing in the vicinity of the contact surface, the stirring resistance is decreased and the grease fluidity is enhanced. Therefore, the oil film thickness and grease fluidity particularly in the very-low-speed condition can be enhanced by adjusting the mixing ratio of an aromatic diurea compound and an aliphatic diurea compound.

Furthermore, it has been revealed that when an alkyldiphenyl ether oil is used as the base oil, the initial performance can be maintained for a long period of time without supplying grease even in a high-temperature environment to which a bearing for continuous casting equipment is exposed.

As a result of studies on the harsh conditions entailing a decrease in the thickness of an oil film of a spherical roller bearing, a multi-row tapered roller bearing, or the like used, for example, for a roll supporting device of a continuous casting process or the like, a pallet carriage, a table roller, a ringer roll or a conveyer in steel facilities, construction machines, mining machines, or the like where the grease-enclosed bearing of the present invention is mainly used, it has been found that a grease composition providing an oil film thickness of 40 nm or more under the conditions of a rolling speed of 0.01 m/s, a temperature of 80°C, a maximum contact pressure of 0.5 GPa and addition of 10 mass% of deionized water relative to the total amount of grease and exhibiting an apparent viscosity of 0.3 to 1.0 Pa•s after 1 minute at a shear velocity of 1,000 s⁻¹ and a temperature of 80°C is most suitable.

The oil film thickness is affected by the temperature or contact pressure, in addition to the above-described rolling speed, and the oil film becomes thin under high-temperature, low-speed and high contact pressure conditions. Among others, the temperature and rolling speed have a larger effect, and the oil film thickness is proportional to about 0.67 power of the temperature or rolling speed. For example, a bearing used for a roll supporting device particularly in a steel continuous casting process is sometimes rotated at a very low speed of about several min⁻¹, and this makes the oil film formation very difficult, but it has been found that excessive wear can be prevented by ensuring a center oil film thickness of 40 nm or more under the conditions of a rolling speed of 0.01 m²/s, a temperature of 80°C and a maximum contact pressure of 0.5 GP. In conventional techniques, a method using a base oil having a high kinematic viscosity is employed so as to ensure the oil film thickness. However, since the base oil viscosity decreases as the temperature is higher, it has been difficult to realize an oil film thickness of 40 nm or more at a temperature of 80°C. In addition, an excessive increase of the kinematic viscosity may involve heat generation due to an increased stirring resistance and cause a reduction in the oil film thickness, leading to a failure to obtain a sufficient effect of oil film formation.

The grease composition is poor in the fluidity compared with a lubricating oil and therefore may cause an insufficient inflow property to cause lubrication failure. In the roller bearing, since the contact surface makes linear contact, the grease may hardly flow into the center part of the contact surface, and lubrication failure is likely to occur. In order to prevent generation of excessive wear due to occurrence of lubrication failure, the fluidity under the conditions involving shearing was studied, as a result, it has been found that when the apparent viscosity after 1 minute at a shear velocity of 1,000 s⁻¹ and a temperature of 80°C is adjusted to 1.0 Pa•s or less, preferably 0.6 Pa•s or less, occurrence of lubrication failure can be prevented and an oil film can be stably formed.

The cause of the lubrication failure in the grease-sealed bearing includes an inadequate grease supply to the contact surface because of grease leakage. In this connection, grease with excessively high fluidity is likely to cause grease leakage. Therefore, the grease fluidity and the leakage propensity in a grease-sealed bearing were examined, as a result, it has been found that when the apparent viscosity after 1 minute at a shear velocity of 1,000 s⁻¹ and a temperature of 80°C is 0.3 Pa•s or more, the grease leakage can be prevented over a long period of time.

The present invention has been made based on the above findings, and provides the following grease-enclosed bearing to attain the above-described object.
(1) A grease-enclosed bearing which freely rollably holds a plurality of rolling elements between an inner ring and an outer ring and is filled with a grease composition containing a thickener and a base oil, wherein the thickener is a diurea compound represented by Formula (1) or a mixture thereof, the base oil contains an alkyldiphenyl ether oil and a poly-α-olefin oil as an optional component, and a mass ratio between the alkyldiphenyl ether oil and the poly-α-olefin oil in the base oil is alkyldiphenyl ether oil : poly-α-olefin oil = from 40 : 60 to 100 : 0,

   Formula (1): R1-NHCONH-R2-NHCONH-R3

   wherein at least either one of R1 and R3 is an aromatic hydrocarbon group having a carbon number of 6 to 12, the other one is an aromatic hydrocarbon group having a carbon number of 6 to 12 or an aliphatic hydrocarbon group having a carbon number of 6 to 20, and R2 is an aromatic hydrocarbon group having a carbon number of 6 to 15.
(2) The grease-enclosed bearing according to (1), 40 mass% or more of a total amount of R1 and R3 in the diurea compound or the mixture thereof is an aromatic hydrocarbon group, an apparent viscosity of the grease composition after 1 minute at a shear velocity of 1,000 s⁻¹ and a temperature of 80°C is from 0.3 to 1.0 Pa•s, and an oil film thickness under a condition of a rolling speed of 0.01 m/s, a temperature of 80°C, a maximum contact pressure of 0.5 GPa and addition of 10 mass% of deionized water relative to the total amount of grease is 40 nm or more.
(3) The grease-enclosed bearing according to (1) or (2), which is used for a roll supporting device of a continuous casting process, a pallet carriage, a table roller, a ringer roll or a conveyer in steel facilities, construction machines or mining machines.

### Effects of the Invention

In the grease composition enclosed in the bearing of the present invention, the base oil containing an alkyldiphenyl ether oil preferably as a main component can maintain the initial performance for a long period of time in a high-temperature environment and at the same time, an aromatic diurea compound excellent in the effect of increasing the oil film thickness and an aliphatic diurea compound excellent in the effect of enhancing the grease fluidity are mixed as the thickener, so that an oil film can be stably formed even in very-low-speed, high-temperature and water-mixed conditions hardly allowing the formation of an oil film, smooth lubrication for preventing occurrence of a surface damage can be achieved, and excellent wear resistance can be exhibited even under water-mixed conditions. Therefore, the grease-enclosed bearing of the present invention has excellent durability by suppressing bearing damage even in a very harsh usage environment, such as under very-low-speed, high-temperature and water-mixed conditions. Furthermore, in the case of a grease-sealed method, the consumption of grease can be greatly reduced.

### Brief Description of the Drawings

Fig. 1 is a cross-sectional view showing one example (spherical roller bearing) of the grease-enclosed bearing of the present invention.
Fig. 2 is a graph showing the relationship between the ratio of an aromatic diurea compound in the thickener and the wear resistance.
Fig. 3 is a graph showing the relationship between the oil film thickness and the wear resistance.
Fig. 4 is a graph showing the relationship between the apparent viscosity and the wear resistance.

### Detailed Description of Embodiments

The present invention is described in detail below by referring to the drawings.

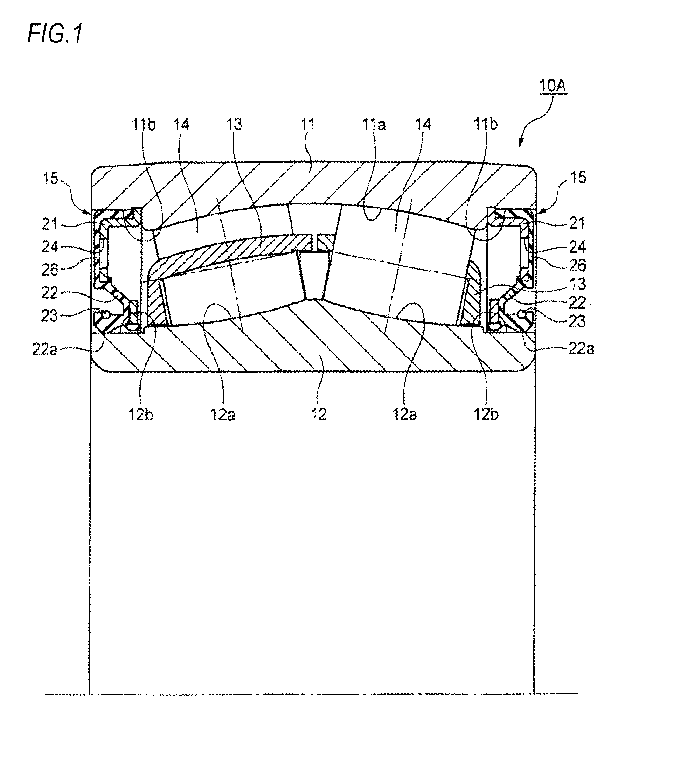

The grease-enclosed bearing of the present invention is particularly suitable for a rolling bearing used in a roll supporting device, and since such a bearing is subject to high load, a spherical roller bearing, a multi-row tapered roller bearing, a multi-row cylindrical roller bearing, a double-row ball bearing, or the like are used. Fig. 1 is a cross-sectional view showing one example thereof.

The sealed bearing 10A having enclosed therein grease is a spherical roller bearing and includes an outer ring 11 having an outer ring raceway groove 11a formed in a spherical shape on its inner circumference surface, an inner ring 12 having two rows of inner ring raceway grooves 12a formed in a spherical shape on its outer circumference surface, a plurality of rolling elements of a barrel-shaped roller 14 rotatably held by a cage 13 and rollably arranged in two rows between the outer ring raceway groove 11a and the inner ring raceway groove 12a, and a sealing device 15 arranged at each of both ends in the axial direction between the outer ring 11 and the inner ring 12 to seal the inside of the bearing.

The sealing device 15 has a core metal 21 obtained by forming a metal sheet into a ring substantially L-shaped in the cross-section and an elastic seal body 22 formed of an elastic material such as rubber, and the elastic seal body 22 is attached to the surface side of the core metal 21. The elastic seal body 22 is further extended in the inner diameter direction from the core metal 21, and a seal lip 22a is provided on the inner diameter side.

Furthermore, in the sealing device 15, the core metal 21 is press-fitted into an inner circumference surface 11b provided at both ends of the outer ring 11 and thereby fixed and at the same time, the seal lip 22a biased in the diameter-reducing direction by a coil spring 23 is elastically slid into contact with the outer circumference surface 12B of the inner ring 12 to achieve sealing between the outer ring 11 and the inner ring 12.

In addition, a plurality of elongated holes 24 with its longitudinal direction extending along the circumferential direction of the core metal 21 are formed on the side surface of the core metal 21. The elongated hole 24 is closed by the elastic seal body 22 attached to the core metal 21, and the elastic seal body 22 in the portion corresponding to the elongated hole 24 constitutes an elastic deformation part 26. The elastic deformation part 26 is formed in a thickness ranging from a film-like thickness of about 0.01 mm to the same thickness as the sheet thickness of the elastic seal body 22 and can easily undergo elastic deformation according to the pressure inside the bearing.

As the elastic material, nitrile rubber (NBR), heat-resistant nitrile rubber (sNBR), hydrogenated nitrile rubber (hNBR), acrylic rubber (ACM), fluororubber, or the like can be used. Particularly, heat-resistant nitrile rubber (sNBR), hydrogenated nitrile rubber (hNBR), acrylic rubber (ACM) and fluororubber are excellent in the heat resistance and preferred, and fluororubber is more preferred.

The bearing 10A is filled with a grease composition (not shown) and is sealed by the sealing device 15, and in the present invention, a grease composition providing an oil film thickness of 40 nm or more, preferably 50 nm or more, more preferably 60 nm or more, under the conditions of a rolling speed of 0.01 m/s, a temperature of 80°C, a maximum contact pressure of 0.5 GPa and addition of 10 mass% of deionized water relative to the total amount of grease and exhibiting an apparent viscosity of 0.3 to 1.0 Pa•s, preferably from 0.45 to 0.6 Pa•s, more preferably from 0.5 to 0.6 Pa•s, after 1 minute at a shear velocity of 1,000 s⁻¹ and a temperature of 80°C is sealed in.

The formulation of the grease composition is not limited as long as the above-described physical properties are satisfied, but the thickener is preferably a diurea compound which is represented by Formula (1) and in which 15 mass% or more, preferably 40 mass% or more, more preferably 68 mass% or more, of the total amount of R1 group and R3 group is an aromatic hydrocarbon group:

Formula (1): R1-NHCONH-R2-NHCONH-R3

wherein R1 and R3 are an aromatic hydrocarbon group having a carbon number of 6 to 12 or an aromatic hydrocarbon group having a carbon number of 6 to 20, R1 and R3 may be the same or different groups, and R2 is an aromatic hydrocarbon group having a carbon number of 6 to 15).

The aromatic diurea compound has a thick, short fiber form, compared with other urea compounds such as aliphatic diurea compound and alicyclic diurea compound. The oil film is considered to become thick resulting from entering of a thick aromatic diurea fiber into the contact surface, and an oil film sufficiently thicker than the base oil can be formed particularly in a very-low-speed region. In the case where the thickener is an aromatic diurea compound in which the entire amount of R1 group and R3 group is an aromatic hydrocarbon group, the apparent viscosity can be adjusted by optimizing the consistency.

Furthermore, as a result of intensive studies on the method for improving the inflow property of grease into the contact surface, it has been found that the apparent viscosity under shearing can be controlled by using an aliphatic diurea compound wherein the entire amount of R1 group and R3 group is composed of an aliphatic hydrocarbon group or aliphatic/aromatic diurea compounds. The aliphatic diurea compound has a thin long fiber form, compared with an aromatic diurea compound. It is considered that since fibers are unidirectionally aligned when the aliphatic diurea compound is subjected to shearing in the vicinity of the contact surface, the stirring resistance is decreased and the grease fluidity is enhanced.

In order to achieve both a large oil film thickness and enhanced inflow property into the contact surface, an aromatic diurea compound and an aliphatic diurea compound are preferably used in mixture.

For increasing the effect of forming an oil film with a large thickness, an aromatic diurea compound of Formula (2) having an aromatic hydrocarbon group at both ends is preferably contained in a ratio of 40 mass% or more relative to the total amount of the thickener:

Formula (2): R4-NHCONH-R2-NHCONH-R4

wherein R4 is an aromatic hydrocarbon group having a carbon number of 6 to 12.

In order to achieve both a large oil film thickness and enhanced inflow property, an aromatic diurea compound of Formula (2) and an aliphatic diurea compound of Formula (3) are preferably used by mixing these compounds at a ratio of, in terms of weight ratio (%), from 40:60 to 95:5, more preferably from 68:32 to 95:5:

Formula (3) : R5-NHCONH-R2-NHCONH-R5

wherein R5 is an aliphatic hydrocarbon group having a carbon number of 6 to 20.

If the weight ratio of the aromatic hydrocarbon group in two terminal groups of the diurea compound is less than 40%, a sufficient effect of increasing the oil film thickness is not obtained, and excessive wear may be caused. By containing an aliphatic hydrocarbon group, an effect of enhancing the inflow property of grease and suppressing the occurrence of starved lubrication is obtained.

The diurea compounds represented by Formulae (1), (2) and (3) are usually obtained by a reaction of a diisocyanate with a monoamine. The diisocyanate which forms R2 after the reaction is an aromatic isocyanate such as 2,4-tolylene diisocyanate, 2,6-tolylene diisocyanate, diphenylmethane 4,4'-diisocyanate and naphthylene-1,5-diisocyanate, or a mixture thereof. The monoamine which forms R1, R3 or R4 is an aromatic amine such as aniline, benzylamine, toluidine and chloroaniline. The monoamine which forms R1, R3 or R5 is a linear amine such as octylamine, nonylamine, decylamine, undecylamine, dodecylamine, tridecylamine, tetradecylamine, pentadecylamine, hexadecylamine, heptadecylamine, octadecylamine, nonyldecylamine and eicosylamine.

In order to achieve an apparent viscosity of 0.3 to 1.0 Pa•s after 1 minute at a shear velocity of 1,000 s⁻¹ and a temperature of 80°C, the worked penetration is preferably from 280 to 340.

It is preferable to introduce an aliphatic hydrocarbon group into a diurea compound, since the apparent viscosity after 1 minute at a shear velocity of 1,000 s⁻¹ and a temperature of 80°C can be reduced with the same worked penetration.

The base oil of the grease composition is also not limited, but a poly-alphaolefin or an ether oil, which are excellent in the heat resistance and compatibility with an elastic member, can be used. As for the ether oil, a dialkyl diphenyl ether oil, an alkyl triphenyl ether oil, an alkyl tetraphenyl ether oil, or the like can be used. Particularly, an alkyldiphenyl ether oil is used as a main component and a poly-α-olefin oil is used as an accessory component, and the mass ratio between the alkyldiphenyl ether oil and the poly-α-olefin oil is from 40:60 to 100:0, preferably from 60:40 to 100:0, more preferably from 85:15 to 100:0, still more preferably from 100:0. The kinematic viscosity of the entire base oil is from 70 to 150 mm²/s, preferably from 70 to 100 mm²/s, at a temperature of 40°C.

In the grease composition, various additives can be added according to the purpose. For example, the equipment for continuous casting of steel is under the conditions where water readily gets mixed in from outside, and therefore, rust may be generated in the bearing stored outside the line particularly during roll maintenance. In order to prevent such rust generation, an antirust additive is preferably mixed. The antirust additive which can be used includes, for example, a carboxylic acid or its derivative (e.g., alkenylsuccinic acid anhydride, alkenylsuccinic acid ester, alkenylsuccinic acid half-ester, alkenylsuccinic acid imide), a carboxylate (e.g., amine salt of a fatty acid, a dibasic acid, a naphthenic acid, a lanolin fatty acid or an alkenylsuccinic acid), a sulfonate (e.g., Ba salt, Zn salt or Na salt of a sulfonic acid), a passivating agent (e.g., Na nitrite, Na molybdate), an ester (e.g., sorbitan trioleate, sorbitan monooleate), and a metal corrosion inhibitor (e.g., benzotriazole, a derivative thereof, zinc oxide). Particularly, an ester, a carboxylic acid or its derivative, and a sulfonic acid metal salt are preferred.

In order to maintain the grease performance for a long period of time, an antioxidant may be suitably used. The antioxidant which can be used includes, for example, an amine-based antioxidant (e.g., α-naphthylamine, phenyl α-naphthylamine, alkylated phenyl-α-naphthylamine, alkylated diphenylamine), a phenol-based antioxidant (e.g., a hindered phenol, such as 2,6-di-tert-butyl-p-cresol, pentaerythrytyl tetrakis[3-(3,5-di-t-butyl-4-hydroxyphenyl)propionate] and octadecyl-3-(3,5-di-t-butyl-4-hydroxyphenyl)propionate), and a quinoline-based antioxidant (e.g., a 2,2,4-trimethyl-1,2-dihydroquinoline polymer). Particularly, an amine-based antioxidant is preferred, and an alkylated diphenylamine is more preferred. Two or more of these may be used in mixture. The content of the antioxidant is from 0 to 10 mass%, preferably from 0.5 to 10 mass%, more preferably from 0.8 to 7 mass%, based on the total amount of the grease composition.

### Examples

The present invention is further described below by referring to Examples and Comparative Examples, but the present invention is not limited thereto.

### (Examples 1 to 24 and Comparative Examples 1 and 2)

Test greases according to the formulation shown in Table 1 were prepared. At this time, in Examples 1 to 7 and 17 to 20, a grease composition using an aromatic diurea compound (tA) as the thickener and a grease composition using an aliphatic diurea compound (tB) as the thickener were prepared separately, and both grease compositions were mixed to prepare a test grease. The mixing ratio of the aromatic diurea compound (tA) and the aliphatic diurea compound (tB) is shown in Table 1. In the thickener tA, TDI was used as the isocyanate and p-toluidine was used as the monoamine, and in the thickener tB, MDI is used as the isocyanate and octylamine was used as the monoamine.

Furthermore, in Examples 10 to 16 and 21 to 24, an aromatic amine compound and an aliphatic amine compound were simultaneously reacted in the base oil to prepare a test grease using the reaction product (tC) as the thickener. In addition, in Examples 11 to 16, an aromatic diamine having an aromatic hydrocarbon at both ends was contained in an amount of 40 mass%.

The mass ratio between an aromatic hydrocarbon group and an aliphatic hydrocarbon group in tC is shown in Table 1. In the thickener tC, MDI was used as the isocyanate, p-toluidine and octylamine were used as the monoamine, and the grease was prepared by simultaneously reacting two kinds of monoamines with the isocyanate in a base oil. Here, MDI stands for diphenylmethane 4,4'-diisocyanate, and DTI stands for a mixture of 2,4-tolylene diisocyanate and 2,6-tolylene diisocyanate.

As the base oil, an alkyldiphenyl ether oil (ADE), a synthetic hydrocarbon oil (PAO), or a mineral oil was used. The kinematic viscosity of the base oil is shown in the Table.

Each test grease was subjected to (1) oil film thickness measurement, (2) apparent viscosity measurement, (3) inflow property evaluation, and (4) wear resistance evaluation, which are described below.

### (1) Oil Film Thickness Measurement

The oil film thickness within the contact surface was measured by optical interferometry using a ball-on-disc tester. The material for the ball was SUJ2, and a glass disc with one surface being subjected to chromium coating and silica coating was used as the disc. The measurement conditions were an atmosphere temperature of 80°C, a rolling speed of 0.01 m/s, and a maximum contact pressure of 0.5 GPa. The test grease used was a grease which was, after previously adding 10 mass% of deionized water, stirred by a glass bar 20 times (once per second) to mix the entirety, and subsequently stirred using a planetary stirring and defoaming apparatus first at a revolution speed of 1,000 min⁻¹ and a rotation speed of 0 min⁻ for 60 seconds and then at a revolution speed of 1,000 min⁻¹ and a rotation speed of 700 min⁻ for 40 seconds, thereby uniformly dispersing water in the grease. The measurement was performed in the state where the test grease was always fed to the contact surface.

### (2) Apparent Viscosity Measurement

The apparent viscosity was measured by a rheometer using parallel plates with a diameter of 25 mm. After filling the gap of 0.1 mm with the test grease, the apparent viscosity was measured under the conditions of a shear velocity of 1,000 s⁻¹ and at temperature of 80°C constant and evaluated by the value after 1 minute.

### (3) Inflow Property Evaluation

The inflow property of the test grease into the contact surface was evaluated by observing the grease flow behavior on the disc flat surface including the contact surface by using the same apparatus as in the measurement of the oil film thickness. That is, a test grease previously added with 10 mass% of deionized water was coated to a constant thickness on the disk surface subjected to chromium coating and silica coating, and the inflow property was evaluated by the time until the test grease was expelled from the rolling face by the ball and was not flowed into the contact surface. By measuring the time until the gas-liquid interface between the test grease and the air came into contact with the end face of the contact surface, a relative value taking the time of Comparative Example 1 as 1 was determined. A larger relative value indicates that the contact surface is continuously supplied with a sufficient amount of the test grease for a long period of time and the inflow property is excellent.

### (4) Wear Resistance Evaluation

The wear resistance evaluation was performed using a spherical roller bearing. The test bearing is a spherical roller bearing with a seal having an inner diameter of 55 mm, an outer diameter of 100 mm and a width of 41 mm. The material of the seal was fluororubber. The test was performed under the conditions of a rotation speed of 3 min⁻¹, a radial load of 40,000 N, a temperature of 80°C and 500 hours by enclosing a test grease added with 10 mass% of deionized water in the full inside of the bearing and pouring 20 ml/day of deionized water in the outside of the seal, and the maximum wear depth was measured. Relative comparison was performed by taking the maximum wear depth of Comparative Example 1 as 1.

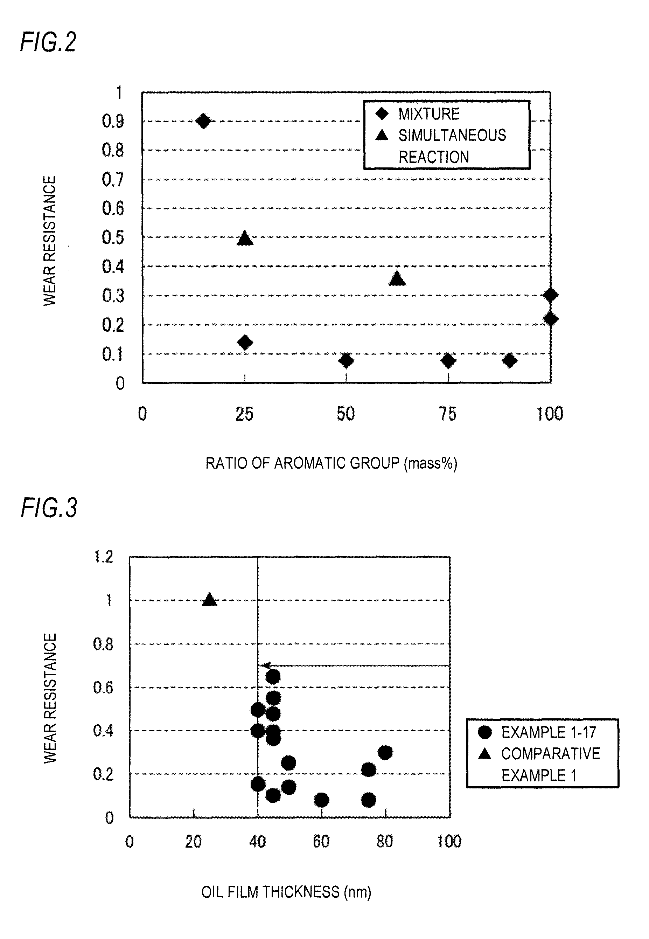

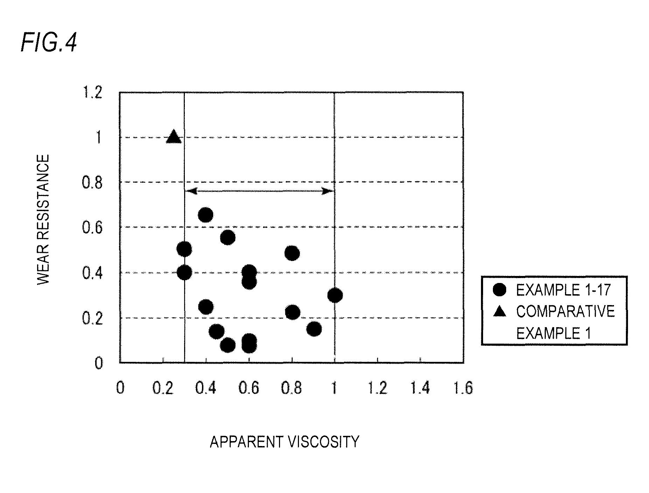

These measurement results and evaluation results are shown in Table 1, and based on the results of Examples 2 to 5 and Examples 8 to 11 and 19, the relationship between the ratio of an aromatic group in the diurea compound and the wear resistance is shown in Fig. 2. In addition, based on the results of Examples 1 to 17 and Comparative Example 1, the relationship between the oil film thickness and the wear resistance is shown in Fig. 3. Furthermore, based on the results of Examples 1 to 17 and Comparative Example 1, the relationship between the apparent viscosity and the wear resistance is shown in Fig. 4.

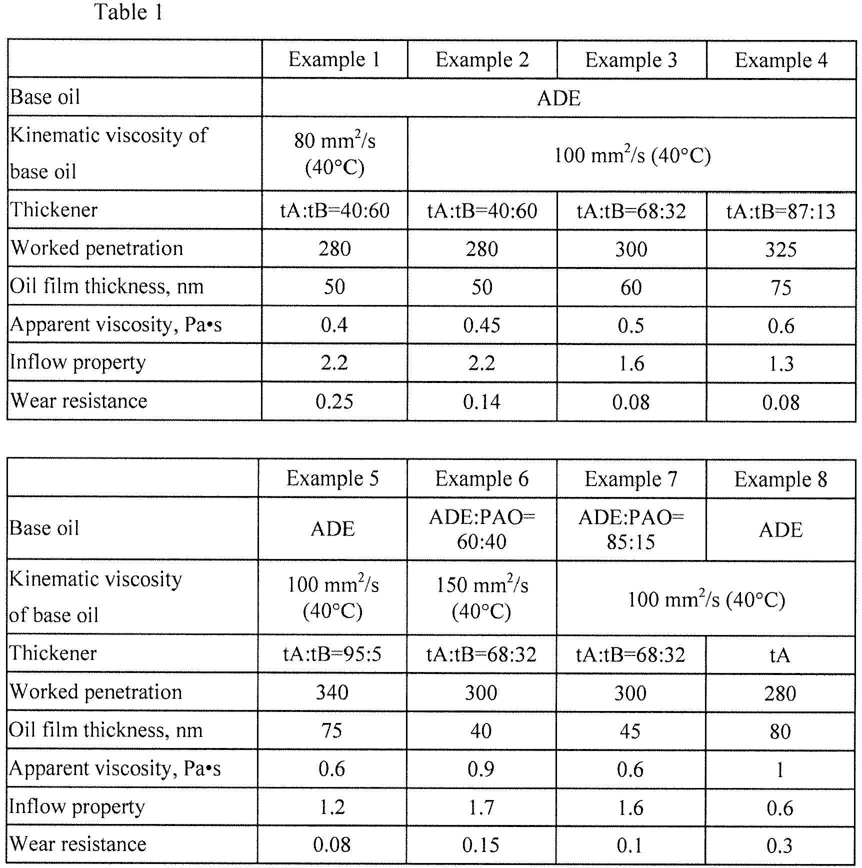

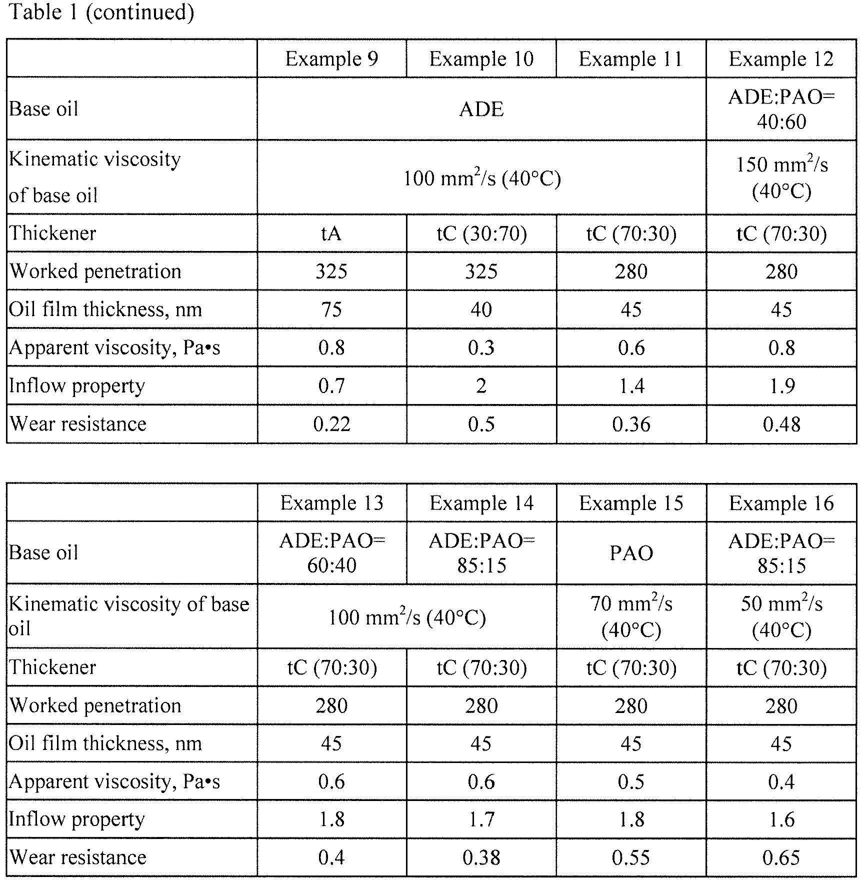

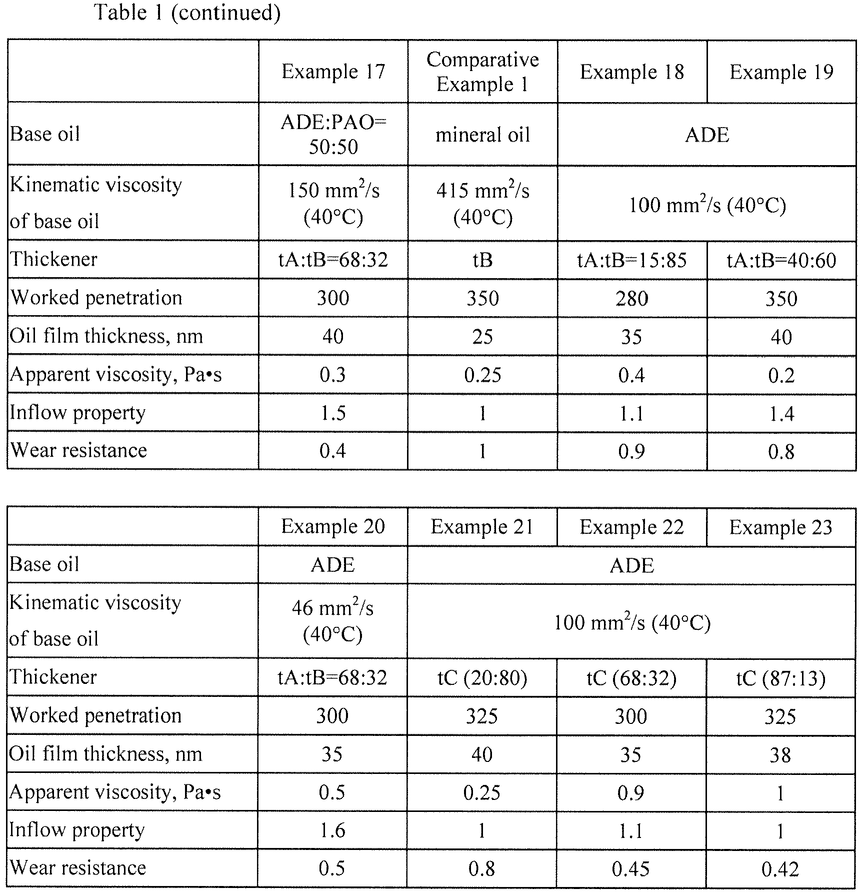

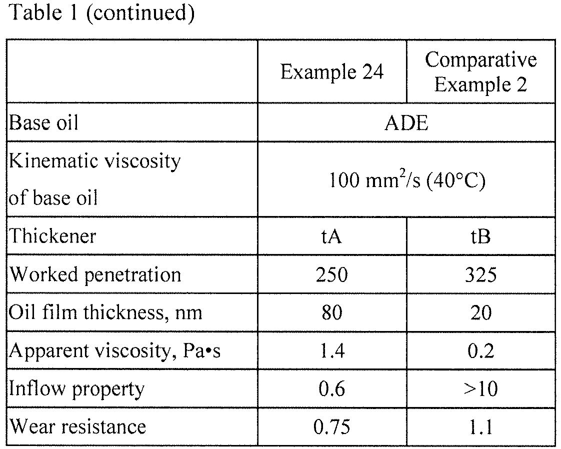

As seen from Examples 1 to 24, when the thickener is a diurea compound represented by Formula (1) or a mixture thereof and when the base oil contains an alkyldiphenyl ether oil and contains, as an optional component, a poly-α-olefin oil, and the mass ratio of alkyldiphenyl ether oil and poly-α-olefin oil in the base oil is from 40:60 to 100:0, the wear can be reduced.

As seen from Examples 1 to 17, when a sealing device-attached rolling bearing having enclosed therein a grease composition providing an oil film thickness of 40 nm or more under the conditions of a rolling speed of 0.01 m/s, a temperature of 80°C and a maximum contact pressure of 0.5 GPa and exhibiting an apparent viscosity of 0.3 to 1.0 Pa•s after 1 minute at a shear velocity of 1,000 s⁻¹ and a temperature of 80°C, the wear can be reduced even in low-speed, high-load, high-temperature and water-mixed conditions.

In Examples 3, 4, 22 and 23, the kind of the thickener is the same but due to difference in the preparation method, the composition and structure of the thickener fiber are different. In Examples 3 and 4 where an aliphatic diurea and an aromatic diurea are synthesized separately and then mixed, the oil film is thick, the inflow property is excellent, and the wear resistance is high, compared with Examples 22 and 23 where three kinds of diurea are simultaneously synthesized and exist as a mixture.

As seen from Examples 1 to 9 and Examples 12 to 17, the wear resistance is improved by containing 40 mass% or more of an aromatic diurea compound.

As seen from Examples 1 to 5, when the weight ratio between the aromatic diurea compound and the aliphatic diurea compound is from 40:60 to 95:5 and the apparent viscosity is 0.6 Pa•s or less, the wear resistance is further improved.

As seen from Examples 3 to 5, when the weight ratio between the aromatic diurea compound and the aliphatic diurea compound is from 68:32 to 95:5 and the apparent viscosity is 0.6 Pa•s or less, remarkably excellent wear resistance is obtained.

It is understood from these results that when the ratio of an aromatic diurea compound in the thickener is from 40 to 95 mass%, the wear resistance is excellent. In addition, it may be preferable to separately prepare an aromatic diurea compound and an aliphatic diurea compound and mix both compounds.

### (Examples 25 to 27)

The test grease of Example 4 was used, and an antirust agent in antirust treatment A or antirust treatment B and an antioxidant, described below, were further added. The rust-preventive property was evaluated by performing (5) a rust prevention test described below. The results are shown in Table 2. Here, the amount added is the proportion in the total amount of the test grease.
- Antirust Treatment A:
   1.0 mass% of sorbitan trioleate (HLB=1.8), 1.0 mass% of succinic anhydride,
   1.0 mass% of calcium dinonylnaphthalenesulfonate, and 1.0 mass% of alkenylsuccinic acid imide
- Antirust Treatment B:
   1.0 mass% of sorbitan trioleate (HLB=1.8) and 1.0 mass% of calcium dinonylnaphthalenesulfonate
- Antioxidant:
   1.0 mass% of alkylated diphenylamine

### (5) Rust Prevention Test

Using an apparatus employed for the bearing antirust test method of ASTM D1743, the bearing (32304J) was filled with the test grease, torque of 9,800 N•cm was applied and after leaving to stand at a temperature of 80°C for 48 hours, the rusting state of the bearing was evaluated according to the following criteria.

### (Criteria for Evaluation)

#1: No rusting on the outer ring race surface.
#2: Rusting in three or less points on the outer ring race surface.
#3: Worse than #2.

**Table 2**

| | Example 25 | Example 26 | Example 27 |
|---|---|---|---|
| Base oil | ADE | | |
| Kinematic viscosity of base oil | 100 mm²/s (40°C) | | |
| Thickener | tA:tB=87:13 | | |
| Worked penetration | 325 | | |
| Antirust agent | antirust treatment A | antirust treatment A | antirust treatment B |
| Antioxidant | added | none | none |
| Rust-preventive property | #1 | #2 | #3 |

As in Examples 25 and 26, it is preferred that in addition to 1.0 mass% of sorbitan trioleate (HLB=1.8) and 1.0 mass% of calcium dinonylnaphthalenesulfonate, succinic anhydride and alkenylsuccinic acid imide are further used in combination to strengthen the antirust performance. Furthermore, as in Example 25, an antioxidant is preferably used in combination.

While the invention has been described in detail and with reference to specific embodiments thereof, it will be apparent to one skilled in the art that various changes and modifications can be made therein without departing from the spirit and scope of the invention.

This application is based on Japanese Patent Application No. 2012-264519 filed on December 3, 2012, and Japanese Patent Application No. 2013-220463 filed on October 23, 2013, the contents of which are incorporated herein by reference.

### Industrial Applicability

The grease-enclosed bearing of the present invention is suitable, for example, for a roll supporting device of a continuous casting process or the like, a pallet carriage, a table roller, a ringer roll or a conveyer in steel facilities, construction machines, mining machines, or the like.

### Description of Reference Numerals and Sings

- 10A:: Rolling bearing with sealing device
- 11:: Outer ring
- 12:: Inner ring
- 14:: Roller (rolling element)
- 15:: Sealing device
- 21:: Core metal
- 22:: Elastic seal body

## Claims

1. A grease-enclosed bearing which freely rollably holds a plurality of rolling elements between an inner ring and an outer ring and is filled with a grease composition containing a thickener and a base oil, wherein the thickener is a diurea compound represented by Formula (1) or a mixture thereof, the base oil contains an alkyldiphenyl ether oil and a poly-α-olefin oil as an optional component, and a mass ratio between the alkyldiphenyl ether oil and the poly-α-olefin oil in the base oil is alkyldiphenyl ether oil : poly-α-olefin oil = from 40 : 60 to 100 : 0,
Formula (1): R1-NHCONH-R2-NHCONH-R3
wherein at least either one of R1 and R3 is an aromatic hydrocarbon group having a carbon number of 6 to 12, the other one is an aromatic hydrocarbon group having a carbon number of 6 to 12 or an aliphatic hydrocarbon group having a carbon number of 6 to 20, and R2 is an aromatic hydrocarbon group having a carbon number of 6 to 15.

2. The grease-enclosed bearing according to claim 1,
wherein 40 mass% or more of a total amount of R1 and R3 in the diurea compound or the mixture thereof is an aromatic hydrocarbon group, an apparent viscosity of the grease composition after 1 minute at a shear velocity of 1,000 s⁻¹ and a temperature of 80°C is from 0.3 to 1.0 Pa•s, and an oil film thickness under a condition of a rolling speed of 0.01 m/s, a temperature of 80°C, a maximum contact pressure of 0.5 GPa and addition of 10 mass% of deionized water relative to the total amount of grease is 40 nm or more.

3. The grease-enclosed bearing according to claim 1 to 2, which is used for a roll supporting device of a continuous casting process, a pallet carriage, a table roller, a ringer roll or a conveyer in steel facilities, construction machines or mining machines.
